# FASCICULE DE BREVET EUROPEEN

(11) **EP 0 790 540 B1**
(45) Date de publication et mention de la délivrance du brevet: **13.09.2000**
(21) Numéro de dépôt: 97101758.7
(22) Date de dépôt: 05.02.1997
(51) Int. Cl.: G04C 13/11

(54) **Transducteur électromécanique à aimants permanents multipolaires**
Elektromagnetischer Transdukter mit multipolaren Permanentmagneten
Electromagnetic transductor with multipolar permanent magnets

(30) Priorité: 15.02.1996 FR 9601879
(43) Date de publication de la demande: 20.08.1997
(73) Titulaire: Eta SA Fabriques d'Ebauches, 2540 Grenchen (CH)
(72) Inventeur: Taghezout, Daho, 1110 Morges (CH)
(74) Mandataire: Balsters, Robert

(56) Documents cités:
- EP-A- 0 356 396
- EP-A- 0 547 534
- WO-A-85/00704
- CH-A- 680 553
- GB-A- 2 054 978

## Description

La présente invention concerne un transducteur électromécanique comprenant un rotor ayant un aimant multipolaire présentant un nombre pair de dipôles magnétiques (ou paires de pôles magnétiques) orientés alternativement dans la direction de l'axe de rotation de ce rotor. Plus particulièrement, la présente invention concerne un transducteur biphasé bidirectionnel dont le stator définit des pôles magnétiques situés essentiellement dans un même plan statorique.

Il est connu du document WO 85/00 704 un transducteur électromécanique reposant sur les mêmes principes que ceux définis ci-dessus et dont le stator est formé de quatre parties statoriques distinctes définissant chacune un pôle magnétique du stator. Les deux branches portant chacune une bobine ont leurs extrémités reliées respectivement à une portion différente des quatre parties statoriques susmentionnées. Deux des parties statoriques présentent respectivement un premier et un deuxième créneaux circulaires dont les merlons sont superposés à l'aimant multipolaire du rotor. Deux merlons adjacents du premier ou du deuxième créneau sont décalés angulairement l'un par rapport à l'autre d'un angle égal à deux fois l'angle au centre défini par les dipôles magnétiques de l'aimant multipolaire, alors qu'un quelconque merlon du premier créneau circulaire est décalé angulairement par rapport à un quelconque merlon du deuxième créneau circulaire de (N + 1/2) fois l'angle au centre des dipôles de l'aimant multipolaire, N étant un nombre entier positif.

Un des inconvénients majeurs du transducteur décrit ci-dessus provient du fait qu'il est très difficile de le monter de manière précise et sûr. En effet, les quatre pièces statoriques indépendantes et imbriquées deux à deux doivent être agencées précisément dans une position stable les unes relativement aux autres.

De plus, ce document ne donne pas d'enseignement à l'homme du métier pour réaliser correctement et de manière fiable un transducteur du type proposé présentant un nombre élevé de paires de pôles rotoriques, par exemple égal à 24 ou 30. En effet, l'homme du métier ne trouve pas d'enseignement satisfaisant pour les structures des deux parties statoriques, désignées par la référence 3, lorsque le nombre de paires de pôles de l'aimant multipolaire augmente. En particulier, les bras reliant les dents de ces deux parties 3 respectivement aux extrémités B et C des deux branches 7 deviennent très étroits et par conséquent faibles.

Le but de la présente invention est de fournir un transducteur électromécanique du type décrit ci-avant, mais présentant une structure fiable et moins délicate à monter. A cet effet, la présente invention a comme objet un transducteur électromécanique comprenant :
- un stator définissant des pôles magnétiques statoriques situés essentiellement dans un même plan statorique;
- un rotor définissant un axe de rotation de celui-ci et comportant un aimant multipolaire présentant un nombre pair de dipôles magnétiques orientés alternativement dans la direction dudit axe de rotation et définissant chacun un premier angle au centre, cet aimant multipolaire définissant un plan rotorique parallèle au plan statorique;
- deux bobines susceptibles d'être reliées à une alimentation électrique;
- ledit stator comprenant une première branche et une deuxième branche portant chacune une des deux bobines, un premier et un deuxième des pôles magnétiques statoriques ayant respectivement un premier et un deuxième créneau circulaire dont les merlons sont au moins partiellement superposés audit aimant multipolaire, deux merlons adjacents du premier ou deuxième créneau circulaire étant décalés angulairement l'un par rapport à l'autre d'un angle égal à deux fois ledit premier angle au centre, un quelconque merlon du premier créneau circulaire étant décalé angulairement par rapport à un quelconque merlon du deuxième créneau circulaire de (N + 1/2) fois ledit premier angle au centre, N étant un nombre entier positif, lesdites première et deuxième branches ayant chacune une première extrémité reliée respectivement auxdits premier et deuxième pôles magnétiques. Ce transducteur est caractérisé en ce qu'un troisième et dernier pôle magnétique desdits pôles magnétiques statoriques est agencé autour dudit axe de rotation et présente à sa périphérie des dents imbriquées dans lesdits premier et deuxième créneaux circulaires et superposées au moins partiellement audit aimant multipolaire, lesdites première et deuxième branches ayant chacune leur seconde extrémité reliée audit troisième pôle magnétique statorique.

Grâce aux caractéristiques de l'invention susmentionnée, le montage du transducteur électromécanique est facilité et l'augmentation du nombre de dipôles magnétiques de l'aimant multipolaire n'a pas pour conséquence de rendre la structure du transducteur plus fragile, comme c'est le cas dans l'art antérieur susmentionné.

D'autres caractéristiques et avantages de la présente invention seront décrits de manière plus détaillée à l'aide de la description suivante, faite en référence aux dessins donnés à titre nullement limitatifs et dans lesquels :
- La figure 1 est une vue schématique de dessus d'un premier mode de réalisation d'un transducteur selon l'invention;
- la figure 2 est une coupe de la figure 1 selon la ligne II-II;
- la figure 3 est une représentation schématique de l'aimant permanent du rotor du transducteur de la figure 1;
- la figure 4 est une vue de dessous d'un anneau en matériau magnétique appartenant au rotor représenté à la figure 2;
- la figure 5 est une vue schématique de dessus d'un deuxième mode de réalisation d'un transducteur selon l'invention;
- la figure 6 est une coupe de la figure 5 selon la ligne VI-VI; et
- la figure 7 est une vue de dessous d'un anneau en matériau magnétique appartenant au stator représenté à la figure 5.

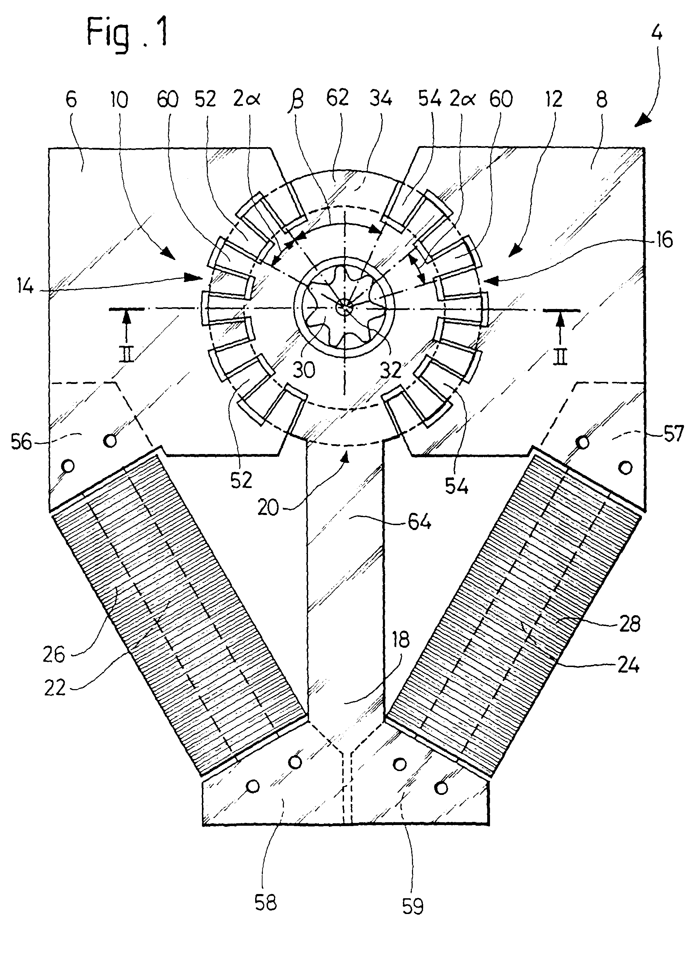

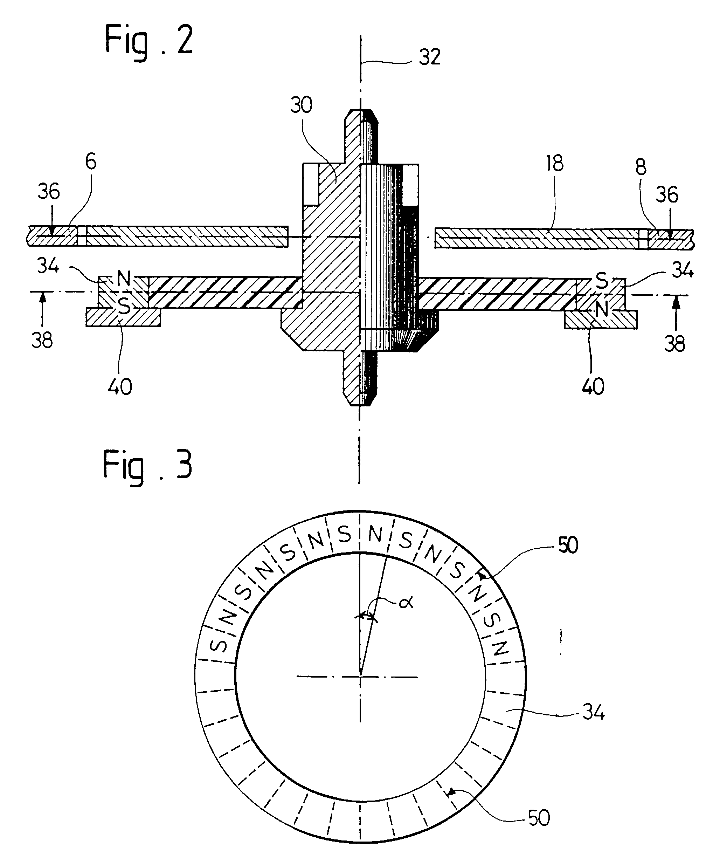

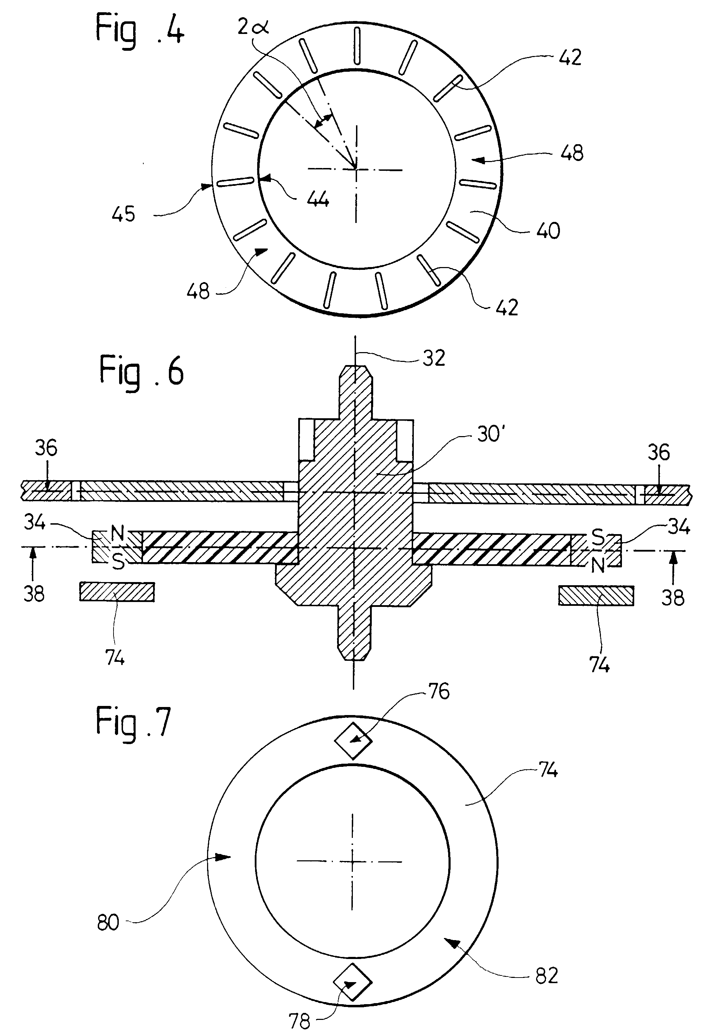

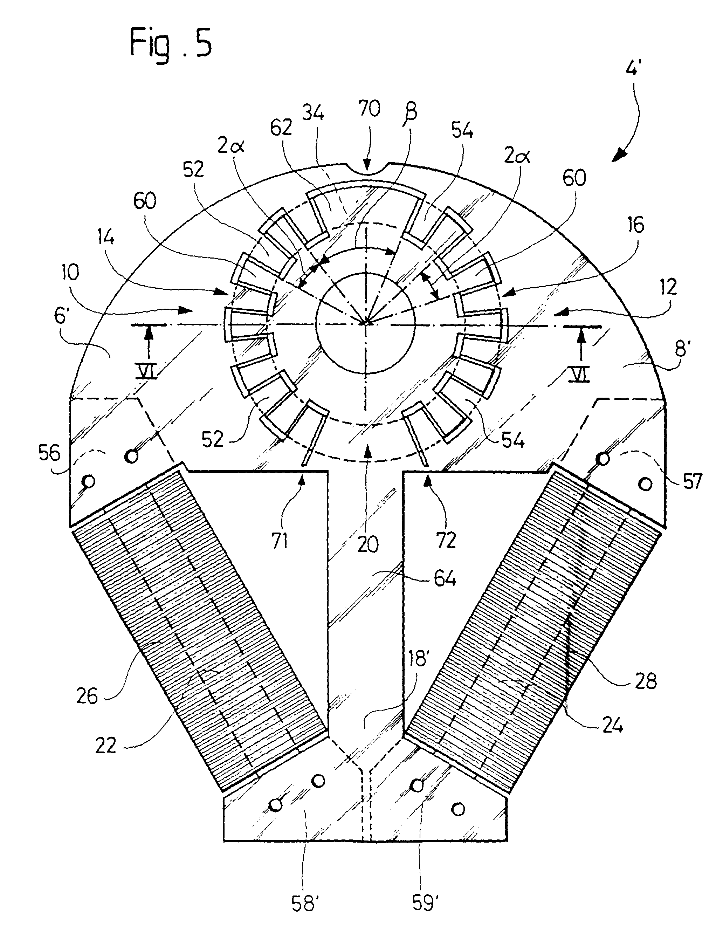

A l'aide des figures 1 à 4, on décrira ci-après un premier mode de réalisation d'un transducteur électromécanique selon l'invention.

Le transducteur comprend un stator 4 comportant une première et une deuxième partie statorique 6 et 8 définissant respectivement un premier et un deuxième pôle magnétique 10 et 12. Les premier et deuxième pôles magnétiques 10 et 12 comprennent respectivement un premier et un deuxième créneau circulaire 14 et 16. Le stator 4 comprend également une troisième partie statorique 18 définissant un troisième pôle magnétique 20 et deux branches 22 et 24 portant chacune une bobine 26 et 28. Ces deux bobines sont susceptibles d'être reliées à une alimentation électrique (non représentée) pour engendrer des flux magnétiques dans les deux circuits magnétiques principaux définis par le stator 4.

Le transducteur comporte également un rotor 30 définissant un axe de rotation 32 et comportant un aimant multipolaire 34 annulaire associé à un flasque magnétique. Cet aimant présente un nombre pair de dipôles magnétiques (ou paires de pôles magnétiques) orientés alternativement dans la direction de l'axe de rotation 32. Chaque dipôle magnétique définit un angle au centre α.

Les trois parties statoriques 6, 8 et 18 sont situées dans un même plan statorique 36. Dans une variante, seuls les pôles magnétiques 10, 12 et 20 sont situés dans le même plan 36 alors que les parties statoriques périphériques sont agencées de manière quelconque selon les besoins de construction et d'agencement du transducteur électromécanique au sein d'un dispositif destiné à le recevoir.

L'aimant multipolaire 34 du rotor 30 est situé dans un plan rotorique 38 parallèle au plan statorique 36, à une certaine distance de celui-ci, étant donné que les pôles magnétiques 10, 12 et 20 sont au moins partiellement superposés à l'aimant multipolaire 34.

Le rotor 30 comporte en outre une plaque 40 en matériau magnétique situé du côté opposé au plan statorique 36 relativement à l'aimant multipolaire 34. La plaque 40 présente la forme d'un anneau auquel l'aimant multipolaire 34 est superposé. Cette plaque annulaire 40 comporte des ouvertures 42, chaque ouverture définissant deux isthmes 44 et 45 constituant des zones à haute réluctance magnétique. Ces ouvertures 42 isolent magnétiquement des secteurs annulaires 48 dont l'angle au centre est égal à 2α, c'est-à-dire à deux fois la valeur de l'angle au centre d'un dipôle magnétique de l'aimant multipolaire 34. On notera que, dans une variante de réalisation, l'angle au centre des secteurs annulaires est égal à 3α, mais peut aussi avoir une autre valeur. De préférence, les ouvertures 42 sont alignées sur les zones intermédiaires 50 de l'aimant multipolaire 34.

Concernant l'agencement des pôles magnétiques statoriques 10, 12 et 20, le premier créneau circulaire 14 et le deuxième créneau circulaire 16, appartenant respectivement aux pôles magnétiques 10 et 12, sont formés respectivement de merlons 52 et de merlons 54. Ces merlons 52 et 54 sont au moins partiellement superposés à l'aimant multipolaire 34 du rotor 30. Deux merlons adjacents 52 ou 54 du premier ou du deuxième créneau circulaire 14 ou 16 sont décalés angulairement l'un par rapport à l'autre d'un angle 2α, c'est-à-dire égal à deux fois la valeur de l'angle au centre α. Ensuite, un quelconque merlon 52 du premier créneau circulaire 14 est décalé angulairement par rapport à un quelconque merlon 54 du deuxième créneau circulaire 16 d'un angle β dont la valeur est égale, de préférence, à (N + 1/2) fois celle de l'angle au centre α, N étant un nombre entier positif. Toutefois, β peut dans, un autre mode de réalisation, avoir une valeur égale à (N + 1/3) α ou (N + 2/3) α.

Les première et deuxième branches 22 et 24 ont des premières extrémités 56 et 57 reliées respectivement et directement aux premier et deuxième pôles magnétiques 10 et 12, alors que leurs secondes extrémités 58 et 59 sont reliées toutes deux directement au troisième pôle magnétique 20.

Le troisième pôle magnétique 20, formant un dernier pôle magnétique du stator 4, est agencé autour de l'axe de rotation 32 du rotor 30 et présente à sa périphérie des dents 60 imbriquées dans les premier et deuxième créneaux circulaires 14 et 16. Les dents 60 sont au moins partiellement superposées à l'aimant multipolaire 34. Entre les merlons 52 du premier créneau circulaire 14 et les merlons 54 du deuxième créneau circulaire 16 sont prévus d'une part une dent intermédiaire 62 et un bras 64 qui prolonge la partie centrale du pôle 20 de manière à permettre la fixation des secondes extrémités 58 et 59 des branches 22 et 24 portant les bobines 26 et 28.

On remarquera que la présence de la dent intermédiaire 62 n'est pas indispensable au fonctionnement du transducteur selon l'invention; cependant elle permet, tout comme la partie du bras 64 superposée à l'aimant multipolaire 34, de récolter le flux engendré par les bobines 26 et 28 qui est couplé au flux magnétique de l'aimant multipolaire 34 à travers les merlons situés aux extrémités des créneaux circulaires 14 et 16, étant donné la présence des ouvertures 42 dans la plaque annulaire 40 servant de plaque de fermeture des circuits magnétiques utiles du transducteur décrit ici. De plus, cette dent intermédiaire 62 permet de définir le couple de positionnement de l'aimant permanent au repos en amplitude et en phase.

On observera que la présence de la plaque 40 est nécessaire à un bon fonctionnement du transducteur selon l'invention, car cette plaque 40 permettent d'augmenter le rendement de ce transducteur et donc de minimiser la consommation en énergie électrique pour un certain travail fourni. Les ouvertures 42 prévues dans la plaque 40 et définissant des secteurs annulaires 48 isolés magnétiquement les uns des autres permet d'isoler magnétiquement les pôles magnétiques 10 et 12 du stator et d'éviter ainsi que les flux de fuite des bobines soient importants. Ceci est particulièrement avantageux pour le transducteur selon l'invention, étant donné que les deux circuits magnétiques principaux de ce transducteur ont un pôle magnétique 20 commun.

Un mode de fonctionnement nullement limitatif du transducteur selon l'invention consiste à alimenter alternativement les bobines 26 et 28 avec une polarité variant alternativement pour faire tourner le rotor de manière pas à pas. Avec une telle alimentation, on remarquera que 30 dipôles magnétiques prévus pour l'aimant multipolaire 34 suffisent pour obtenir 60 pas par tour du rotor 30, ce qui est avantageux pour une application horlogère.

A l'aide des figures 5 à 7, on décrira ci-après un deuxième mode de réalisation d'un transducteur électromécanique selon l'invention.

Les références déjà décrites précédemment ne seront pas à nouveau décrites ici en détail. On notera que le rotor n'a pas été représenté à la figure 5 pour ne pas surcharger le dessin.

Ce deuxième mode de réalisation de l'invention se différencie du premier mode de réalisation décrit ci-avant sous deux aspects.

En premier lieu, les trois parties statoriques 6', 8' et 18' formant respectivement les pôles magnétiques statoriques 10, 12 et 20 sont matériellement reliées ensemble de manière à former une seule et même pièce. Les parties statoriques 6', 8' et 18' sont reliées ensemble au moyen d'isthmes 70, 71 et 72 formant des zones à haute réluctance magnétique isolant ainsi magnétiquement les pôles magnétiques 10, 12 et 20. L'agencement des créneaux circulaires 14 et 16, ainsi que l'agencement des dents 60 du pôle magnétique 20 sont similaires à ceux du premier mode de réalisation.

En second lieu, ce deuxième mode de réalisation se différencie du premier mode de réalisation en ce qu'il est prévu une plaque annulaire 74 située du côté opposé au plan statorique 36 relativement à l'aimant multipolaire 34 du rotor 30'. Cet anneau 74 remplace l'anneau 40 du premier mode de réalisation. L'anneau 74, également formé d'un matériau magnétique, est superposé au moins partiellement à l'aimant multipolaire 34 et est agencé fixement relativement au stator 4'. La plaque annulaire 74 comporte deux ouvertures 76 et 78 servant à isoler magnétiquement deux secteurs 80 et 82 de l'anneau 74. Cet anneau 74 est agencé relativement au stator 4' de manière que les segments annulaires 80 et 82 soient respectivement superposés aux créneaux circulaires 14 et 16. Ainsi, les ouvertures 76 et 78 servent à isoler magnétiquement les pôles magnétiques 10 et 12.

On observera que l'anneau 74 permet d'augmenter le rendement du transducteur électromécanique selon l'invention et permet également de diminuer l'attraction exercée par les pôles magnétiques 10, 12 et 20 sur l'aimant multipolaire 34.

Le fonctionnement du transducteur électromécanique selon le deuxième mode de réalisation est similaire à celui du premier mode de réalisation décrit précédemment.

## Revendications

1. Transducteur électromécanique comprenant :
- un stator (4, 4') définissant des pôles magnétiques statoriques (10, 12, 20) situés essentiellement dans un même plan statorique (36);
- un rotor (30, 30') définissant un axe de rotation (32) de celui-ci et comportant un aimant multipolaire (34) présentant un nombre pair de dipôles magnétiques orientés alternativement selon ledit axe de rotation et définissant chacun un premier angle au centre (α), cet aimant multipolaire (34) définissant un plan rotorique (38) parallèle audit plan statorique;
- deux bobines (26, 28) susceptibles d'être reliées à une alimentation électrique;
- ledit stator (4; 4') comprenant une première branche (22) et une deuxième branche (24) portant chacune une des deux bobines, un premier (10) et un deuxième (12) desdits pôles magnétiques statoriques ayant respectivement un premier et un deuxième créneau circulaire (14 et 16) dont les merlons (52, 54) sont au moins partiellement superposés audit aimant multipolaire (34), deux merlons adjacents dudit premier ou deuxième créneau circulaire étant décalés angulairement l'un par rapport à l'autre d'un angle égal à deux fois ledit premier angle au centre (α), un quelconque merlon dudit premier créneau circulaire étant décalé angulairement par rapport à un quelconque merlon dudit deuxième créneau circulaire de N + 1/2 fois ledit premier angle au centre (α), N étant un nombre entier positif, lesdites première et deuxième branches (22 et 24) ayant des premières extrémités (56, 57) reliées respectivement auxdits premier et deuxième pôles magnétiques (10, 12), caractérisé en ce qu'un troisième et dernier pôle magnétique (20) desdits pôles magnétiques statoriques est agencé autour dudit axe de rotation (32) et présente à sa périphérie des dents (60) imbriquées dans lesdits premier et deuxième créneaux circulaires (14, 16) et superposées au moins partiellement audit aimant multipolaire (34), lesdites première et deuxième branches ayant leurs secondes extrémités (58, 59) reliées audit troisième pôle magnétique statorique (20).

2. Transducteur selon la revendication 1, caractérisé en ce qu'il comporte en outre une plaque (40) en matériau magnétique située du côté opposé audit plan statorique (36) relativement audit aimant multipolaire (34), cette plaque étant superposée au moins partiellement à cet aimant multipolaire et étant solidaire en rotation dudit rotor (30).

3. Transducteur selon la revendication 2, caractérisé en ce que ladite plaque magnétique (40) est une plaque annulaire ayant des ouvertures (42) agencées de manière à isoler magnétiquement des secteurs annulaires (48) dont l'angle au centre est égal ou supérieur à deux fois ledit premier angle au centre (α).

4. Transducteur selon la revendication 1, caractérisé en ce qu'il comprend en outre une plaque magnétique (74) située du côté opposé audit plan statorique (36) relativement audit aimant multipolaire (34), cette plaque étant superposée au moins partiellement à cet aimant multipolaire et étant agencée fixement relativement audit stator (4').

5. Transducteur selon la revendication 4, caractérisé en ce que ladite plaque magnétique (74) est annulaire et présente deux ouvertures (76, 78) isolant magnétiquement deux secteurs annulaires (80, 82) superposés respectivement au moins partiellement auxdits premier et deuxième créneaux circulaires (14, 16).

6. Transducteur selon l'une des revendications précédentes, caractérisé en ce que lesdits premier, deuxième et troisième pôles magnétiques statoriques (10, 12, 20) sont formés par une seule et même pièce définissant trois isthmes (70, 71, 72) à haute réluctance magnétique isolant magnétiquement lesdits pôles statoriques (10, 12, 20).

7. Transducteur selon l'une des revendications précédentes, caractérisé en ce que le nombre de dipôles dudit aimant multipolaire (34) est égal à trente, ladite alimentation électrique étant agencée pour faire tourner ledit rotor (30; 30') de soixante pas par tour en alimentant alternativement les deux bobines (26, 28).

## Patentansprüche

1. Elektromechanischer Meßwandler, umfassend:
- einen Stator (4, 4'), der Stator-Magnetpole (10, 12, 20) definiert, die sich im wesentlichen in einer Statorebene (36) befinden;
- einen Rotor (30, 30'), der eine Drehachse (32) definiert und einen Multipolmagneten enthält, der eine gerade Anzahl von magnetischen Dipolen aufweist, die abwechselnd längs der Drehachse orientiert sind und jeweils einen ersten Zentrumswinkel (α) definieren, wobei dieser Multipolmagnet (34) eine zur Statorebene parallele Rotorebene (38) definiert;
- zwei Spulen (26, 28), die mit einer Stromversorgung verbunden werden können;
- wobei der Stator (4; 4') einen ersten Zweig (22) und einen zweiten Zweig (24) umfaßt, wovon jeder eine der beiden Spulen trägt, wobei ein erster (10) und ein zweiter (12) der Statormagnetpole eine erste bzw. eine zweite kreisförmige Zinnenanordnung (14 und 16) besitzen, deren Zinnen (52, 54) wenigstens teilweise dem Mehrpolmagneten (34) überlagert sind, wobei zwei benachbarte Zinnen der ersten oder der zweiten kreisförmigen Zinnenanordnung in Winkelrichtung relativ zueinander um einen Winkel versetzt sind, der gleich dem doppelten Zentrumswinkel (α) ist, wobei eine beliebige Zinne der ersten kreisförmigen Zinnenanordnung in Winkelrichtung in bezug auf eine beliebige Zinne der zweiten kreisförmigen Zinnenanordnung um den (N + 1/2)-fachen ersten Zentrumswinkel (α) versetzt ist, wobei N eine positive ganze Zahl ist, wobei die ersten und zweiten Zweige (22 und 24) erste Enden (56, 57) besitzen, die mit den ersten bzw. zweiten Magnetpolen (10, 12) verbunden sind, dadurch gekennzeichnet, daß ein dritter und letzter Magnetpol (20) der Stator-Magnetpole um die Drehachse (32) angeordnet ist und an seinem Umfang Zähne (60) aufweist, die mit den ersten und zweiten kreisförmigen Zinnenanordnungen (14, 16) verzahnt sind und dem Mehrpolmagneten (34) wenigstens teilweise überlagert sind, wobei die ersten und zweiten Zweige mit ihren zweiten Enden (58, 59) mit dem dritten Statormagnetpol (20) verbunden sind.

2. Meßwandler nach Anspruch 1, dadurch gekennzeichnet, daß er außerdem eine Platte (40) aus magnetischem Material enthält, die sich auf der der Statorebene (36) in bezug auf den Mehrpolmagneten (34) gegenüberliegenden Seite befindet, wobei diese Platte wenigstens teilweise diesem Mehrpolmagneten überlagert ist und mit dem Rotor (30) drehfest verbunden ist.

3. Meßwandler nach Anspruch 2, dadurch gekennzeichnet, daß die magnetische Platte (40) eine ringförmige Platte ist, die Öffnungen (42) besitzt, die in der Weise angeordnet sind, daß Ringsektoren (48), deren Zentrumswinkel wenigstens gleich dem doppelten ersten Zentrumswinkel (a) ist, magnetisch isoliert sind.

4. Meßwandler nach Anspruch 1, dadurch gekennzeichnet, daß er außerdem eine magnetische Platte (74) umfaßt, die sich auf der der Statorebene (36) in bezug auf den Mehrpolmagneten (34) gegenüberliegenden Seite befindet, wobei diese Platte wenigstens teilweise diesem Mehrpolmagneten überlagert ist und in bezug auf den Stator (4') fest angeordnet ist.

5. Meßwandler nach Anspruch 4, dadurch gekennzeichnet, daß die magnetische Platte (74) ringförmig ist und zwei Öffnungen (76, 78) aufweist, die zwei Ringsektoren (80, 82), die wenigstens teilweise der ersten bzw. der zweiten kreisförmigen Zinnenanordnung (14, 16) überlagert sind, magnetisch isolieren.

6. Meßwandler nach einem der vorhergehenden Ansprüche, dadurch gekennzeichnet, daß die ersten, zweiten und dritten Stator-Magnetpole (10, 12, 20) aus ein und demselben Teil gebildet sind, das drei Engstellen (70, 71, 72) mit hoher magnetischer Reluktanz definiert, die die Statorpole (10, 12, 20) magnetisch isolieren.

7. Meßwandler nach einem der vorhergehenden Ansprüche, dadurch gekennzeichnet, daß die Anzahl der Dipole des Mehrpolmagneten (34) gleich dreißig ist, wobei die Stromversorgung so beschaffen ist, daß sie den Rotor (30; 30') um sechzig Schritte pro Umdrehung bei abwechselnder Versorgung der beiden Spulen (26, 28) dreht.

## Claims

1. Electromecanic transducer comprising :
- a stator (4, 4') defining statoric magnetic poles (10, 12, 20) which are situated essentially in a same statoric plane (36);
- a rotor (30, 30') defining an axis of rotation (32) of the rotor and comprising a multipolar magnet (34) presenting an even number of magnetic dipoles which are orientated alternately along said axis of rotation and each defining a first central angle (α), this multipolar magnet (34) defining a rotor plane (38) parallel to said statoric plane;
- two coils (26, 28) arranged to be connected to an electric power supply;
- said stator (4; 4') comprising a first branch (22) and a second branch (24) which each contain one of the two coils, a first (10) and a second (12) of said statoric magnetic poles having respectively a first and a second circular battlement (14 and 16) the merlons (52, 54) of which being at least partially superposed to said multipolar magnet (34), two adjacent merlons of said first or second circular battlement being angularly shifted one with respect to the other by an angle which is twice said first central angle (α), any merlon of said first circular battlement being angularly shifted with respect to any merlon of said second circular battlement by N + 1/2 times said first central angle (α), N being a positive integer, said first and second branches (22 and 24) having first extremities (56, 57) respectively connected to said first and second magnetic poles (10, 12), characterised in that a third and final magnetic pole (20) of said statoric magnetic poles is arranged around said axis of rotation (32) and has at its periphery, teeth (60) which overlap said first and second circular battlements (14, 16) and which are superposed at least partially to said multipolar magnet (34), said first and second branches aving their second extremities (58, 59) connected to said third statoric magnetic pole (20).

2. Transducer according to claim 1, characterized in that it further comprises a plate (40) formed of a magnetic material and situated on the opposite side of said statoric plane (36) with respect to said multipolar magnet (34), said plate being at least partially superposed to said multipolar magnet and being rotationally fixed to said rotor (30).

3. Transducer according to claim 2, characterized in that said magnetic plate (40) is an annular plate having apertures (42) arranged in such a way as to magnetically isolate annular sections (48) which have a central angle equal or superior to twice said first central angle (α).

4. Transducer according to claim 1, characterized in that it further comprises a magnetic plate (74) situated on the opposite side of said statoric plane (36) with respect to said multipolar magnet (34), this plate being at least partially superposed to said multipolar magnet and being arranged fixedly with respect to said stator (4').

5. Transducer according to claim 4, characterized in that said magnetic plate (74) is annular and has two apertures (76), magnetically isolating two annular sections (80, 82) which are at least partially superposed to respectively said first and said second circular battlement (14, 16).

6. Transducer according to anyone of the preceding claims, characterized in that said first, second and third statoric magnetic poles (10, 12, 20) are formed of a same and single piece defining three isthmus (70, 71, 72) of high magnetic reluctance magnetically isolating said statoric poles (10, 12, 20).

7. Transducer according to anyone of the preceding claims, characterized in that the number of dipoles of said multipolar magnet (34) is equal to thirty, said electric power supply being arranged so as to cause said rotor (30; 30') to rotate at sixty steps per turn by powering alternatively the two coils (26, 28).
